# EUROPEAN PATENT SPECIFICATION

(11) **EP 0 603 882 B1**
(45) Date of publication and mention of the grant of the patent: **21.10.1998**
(21) Application number: 93120787.2
(22) Date of filing: 23.12.1993
(51) Int. Cl.: B29C 45/72, B29C 45/40

(54) **Injection molding arrangement with improved preform cooling**
Spritzgiessanordnung mit verbesserter Kühlung einer Vorform
Dispositif de moulage par injection avec refroidissement amélioré d'une préforme

(30) Priority: 24.12.1992 US 996792
(43) Date of publication of application: 29.06.1994
(73) Proprietor: PepsiCo, Inc., Purchase, New York 10577 (US)
(72) Inventor: Cahill, John W., Yorktown Heights, New York 10598 (US); Mero, Christoper, New Milford, Connecticut 06776 (US)
(74) Representative: Körber, Wolfhart, Dr. rer.nat.

(56) References cited:
- GB-A- 1 347 070
- GB-A- 1 461 589
- NL-A- 9 000 414
- US-A- 4 472 131

## Description

### BACKGROUND OF THE INVENTION

### 1. Field of the Invention

The present invention relates generally to an arrangement for forming hollow preforms or parisons by injection molding an organic polymer material such as PET. More particularly, the subject invention pertains to a novel arrangement for more rapidly cooling injection molded preforms after they are removed from the injection molding machine.

### 2. Discussion of the Prior Art

The hollow preforms or parisons formed pursuant to the present invention can be employed in a subsequent blow molding operation to form both refillable and non-refillable plastic bottles. An economically and commercially viable refillable plastic bottle reduces existing landfill and recycling problems associated with disposable plastic containers, such as disposable PET plastic bottles. In addition, a refillable plastic bottle will permit the entry of safer, lighter weight plastic containers into those markets currently dominated by glass, where legislation prohibits the use of non-returnable containers.

At the present, it should be understood that several polymer candidates provide the desired clarity and physical properties deemed necessary to produce refillable plastic containers. These polymers include polyethylene terephthalate (PET), acrylonitrile copolymers, polyacrylate, polycarbonate, etc. Of the polymers commercially available, PET at the present time offers the best balance of properties and cost/performance ratios.

In the art of forming organic plastic preforms or parisons, it has been a common practice to injection mold a tubular perform by forcing heated liquid polymer through a nozzle or die into a mold to form an intermediate preform blank. This step involves injecting polymer material into a cavity, the outer boundary of which is a mold surface, and the inner boundary of which is a hollow cooled core pin. The preform is then removed to a blow mold wherein the preform is expanded to the final shape of the blow mold by directing a fluid, such as air, against the inner surface of the preform, thereby causing in expansion thereof.

Preform molding machines as discussed herein with relation to the prior art are available commercially, such as from Husky Injection Molding Systems, P.O. Box 1000, 530 Queen Street S., Bolton, Ontario, Canada L7E 5S5, or 303-313 Washington Street, Auburn, MA 01501. These prior art preform molding machines produce PET preforms which are subsequently typically used in a blow molding machine to produce PET bottles therefrom, typically sired from 0.25 to 3.0 liters. A wide range of preform mold sizes are available in the prior art to meet the volume requirements for different applications, including proven 4, 8, 12, 16, 24, 32, 48, 72 and 96 cavity designs.

Successful stretch blowing of PET bottles begins with injection molding high quality preforms. The injection molded preform has a direct effect on the appearance, burst and top load strength, and other performance characteristics of the final bottle. The manufactured preform must be produced to accurate dimensions, as a uniform concentric preform will thickness results in maximum bottle strength at minimum weight. Moreover, the thread finish must be molded to close tolerances for effective closure scaling. The aesthetic appearance of the preform is also important, and the preform must be clear and free of blemishes and crystallinity. Moreover, acetaldehyde (AA), a byproduct of heating PET, must be minimized so that the flavor of the contents is not adversely affected thereby.

In commercially available preform machines, liquid PET at approximately 279.4°C (535°F) is typically injected through a nozzle into an appropriately shaped preform cavity which is mounted on a stationary platen of the molding machine. A core rod and neck split ring (two parts) are mounted on a movable platen of the molding machine which is precisely aligned relative to the stationary platen by cylindrical tie bars extending between the two platens. A mechanical arrangement provides for reliable displacement of the finished preforms from the molds, and cams provide reliable opening and closing of the neck split rings.

After the liquid PET is fully injected into the mold cavity around the core rod and into the neck split ring, it is important to cool the preform as quickly as possible. PET exists in amorphous and crystalline states. Amorphous PET is desirable in the preform, not crystalline PET. Crystalline PET forms generally in the temperature range of 250°-400°F, and accordingly, it is important to cool the preform through the 121°C-200°C (250°-400°F) temperature range as quickly as possible to minimize the formation of undesirable crystalline PET in the preform. Amorphous PET has a glass transition temperature of approximately 79.4°C (175°F).

Additionally, faster cooling of the preforms results in a reduced cycle time for the preform molding equipment, which results in increased productivity of the preform molding equipment.

Present molding machines, such as those of Husky Injection Molding Systems, cool the preform in the mold by circulating liquid coolant both through the core rod and around the mold cavity block. In these machines, most of the cooling is through the core rod as the preform shrinks onto the core rod and away from the cavity wall. After the outer skin of the preform is below the glass transition temperature of 79.4°C (175°F) the preform can be removed from the mold, while the interior thereof between the outer skin is still above 79.4°C (175°F) in a rubbery state.

In present molding machines, an integrated robotic preform handling system, an aluminum cooling takeout plate, and a cooling conveyor are available as standard machine attachments for further post mold cooling of the preforms. The preforms are further cooled after removal from the mold by using a multi-position robotic system with a water cooled takeout plate and on integrated cooling conveyor. The robotic post-cooling system includes a water cooled takeout plate having as many as three cooling tubes therein for each mold cavity, end the robotic system places the preforms removed from the mold cavities into one of three sets of cooling tubes. The preforms are maintained in the cooling tubes for three molding cycles, and after each molding cycle, one third of the preforms in the cooling takeout plate, which have been cooled therein for three molding cycles, are released onto a take-away conveyor. The multi-position robotic system increases the time preforms are in cooled tubes. The water cooled tubes have positive ejection to ensure uniform release of preforms onto the cooling conveyor.

The robotic post-cooling system as described hereinabove takes too much time, having a cycle time of approximately 20 seconds for preforms with a wall thickness of 0.38 cm (0.150 inches), and accordingly is a limiting factor on the cycling time, and hence the production rate, of each molding machine.

In designing such prior art preform injection molding machines, cooling water is normally considered to be a problem. The cooling water circulates into each core rod, around each mold cavity block, and through the water cooled takeout plate at a flow rate of approximately 1364 ℓ/min (300 gallons/minute). The cooling water should be as cold as possible to provide for rapid cooling of the preforms, however condensation of water vapor on the cooled equipment is a problem. Relative humidity is a limiting factor, as water vapor condenses on the core rods and flashes when heated liquid PET is injected into the mold cavity, causing stresses in the resultant preform.

### SUMMARY OF THE INVENTION

The present invention results in the elimination of the robotic preform handling system and also of the aluminum cooling takeout plate with three tubes for each mold cavity, and also results in a reduced cycle time for each molding cycle, down from 20 seconds in the prior art to approximately 15 seconds for the present invention.

Accordingly, it is a primary object of the present invention to provide an arrangement, including an injection molding machine and also a method of injection molding, for forming hollow preforms or parisons by injection molding an organic polymer material such as PET. More particularly, the subject invention provides a novel arrangement for more rapidly cooling injection molded preforms after they are removed from the injection molding machine.

A further object of the subject invention is the provision of an injection molding machine having a reduced cycle time relative to prior art machines, with a cycle time of approximately 15 seconds, which is substantially faster than prior art cycle times of approximately 20 seconds.

In accordance with the present invention an injection molding machine for injection molding preforms made of organic polymer material, and for achieving rapid post-mold cooling of the preforms after injection molding thereof is provided, comprising:
a stationary platen (12) supporting a plurality of exterior preform mold cavities;
a movable platen supporting a plurality of interior preform core rods and neck split rings, with an interior preform core rod and a neck split ring being associated with and positioned adjacent to each of the plurality of exterior preform mold cavities during molding of the preforms; and
a cooling water bath chamber with an open top, positioned below the movable platen, such that after the formation of a plurality of preforms, wherein the outer skins of the preforms are hardened and below the glass transition temperature of the organic polymer material, the movable platen is displaced away from the stationary platen, and the neck split rings displace the preforms from their associated core rods, and then the neck split rings are opened to release the preforms into cooling water in the cooling water bath chamber, wherein the preforms sink into the cooling water bath maintained at a temperature of at least about 4,4 °C (40 °F) and including a lubricant additive added to the cooling water in the cooling water bath chamber to prevent possible damage to preforms which contact each other in the cooling water bath and are cooled by cooling water contacting all exterior surfaces of the preforms. There is also provided a method according to claim 11.

The lubricant additive is preferably added to the water bath at a ratio of 1 part lubricant to approximately 100 to 500 parts water, and preferably comprises an emulsion of oxidized polyethylene. Oxidized polyethylene is a wax-like lubricant material, and is preferably added to the cooling water at a low concentration of 00.25% (1:400 ratio). One advantage to this approach is that the lubricant additive remains as a coating on the preforms after their removal from the cooling water bath, which aids in preventing damage to the preforms during further handling thereof.

The injection molding machine includes a horizontal and vertical conveyor system mounted in the cooling water bath chamber to index and convey the preforms horizontally and vertically out of the cooling water bath chamber.

A heat exchanger cooler and coolant circulating system is provided to maintain the cooling water in the bath at a temperature of approximately 40°F, which maximizes cooling of the preforms and also minimizes the condensation of water vapor in and around the injection molding machine.

The cooling water bath chamber preferably comprises a cooling water tank having dimensions of approximately 122 cm x 122 cm (4 feet by 4 feet), which depends primarily upon the dimensions of the injection molding equipment, and a depth of approximately 30,5 to 61 cm (1 to 2 feet).

### BRIEF DESCRIPTION OF THE DRAWINGS

The foregoing objects and advantages of the present invention for an injection molding arrangement with improved preform cooling may be more readily understood by one skilled in the art with reference being had to the following detailed description of several preferred embodiments thereof, taken in conjunction with the accompanying drawings wherein like elements are designated by identical reference numerals throughout the several views, and in which:
Figure 1 is a front perspective view of an exemplary embodiment of the movable and stationary platens of an injection molding machine, with the platens being angularly displaced to illustrate the nature of their operation; and
Figure 2 illustrates an elevational view of a schematic drawing of an injection molding machine with improved preform cooling constructed pursuant to the teachings of the present invention.

### DETAILED DESCRIPTION OF THE DRAWINGS

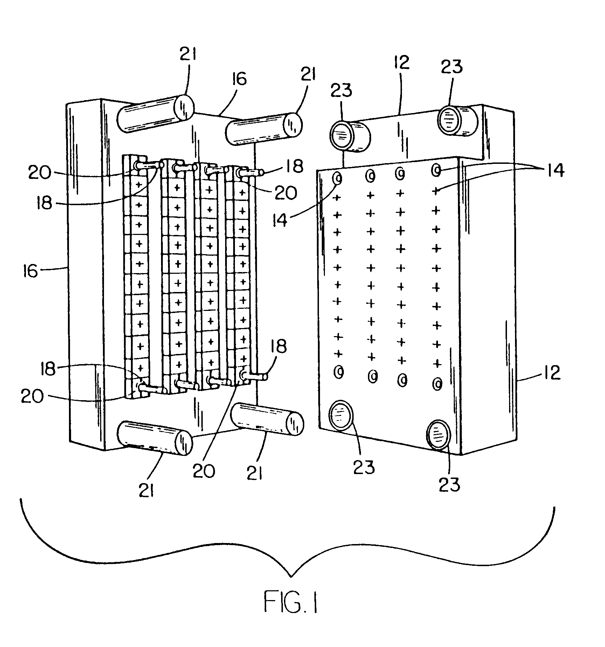

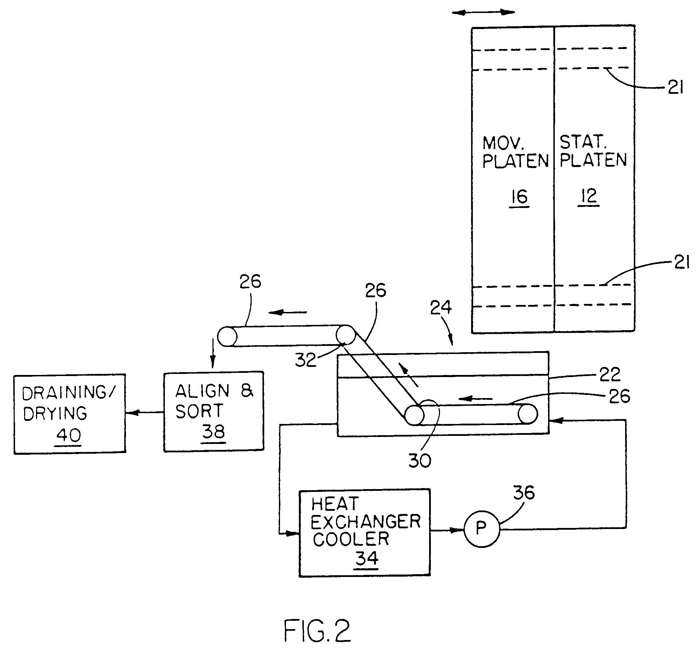

Referring to the drawings in detail, Figure 1 is a front perspective view of the movable and stationary platens of an injection molding machine for forming hollow preforms or parisons by injection molding an organic polymer material such as PET. The injection molding machine includes a stationary platen 12 supporting a plurality of exterior preform mold cavities 14, shown as a 4 by 12 array of mold cavities, and a movable platen 16 supporting a corresponding array of interior preform core rods 18 and neck split ring and thread molds 20. A standard injection molding machine also includes much additional equipment and associated parts such as core locking rings and gate pads as standard equipment, and because this structure is well known, it will not be described in detail herein. One interior preform core rod 18 and a pair of neck split ring molds 20 are associated with and positioned adjacent to each of the plurality of exterior preform mold cavities 14 during molding of the preforms when the two platens are securely clamped together, as shown generally in Figure 2.

Figure 1 illustrates the movable and stationary platens as being angularly displaced with respect to each other to illustrate the preform molding equipment. When the movable and stationary platens are mounted in the injection molding machine, the inner surfaces of the platens face each other, as illustrated in Figure 2, and are aligned with respect to each other by guide pins 21 extending from the movable platen 16 into corresponding alignment bores 23 in the stationary platen 12. The movable platen 16 is supported for linear movement relative to the stationary platen by tie bars, not shown, to close the two platens and molding equipment during injection molding, and to open the two platens to allow removal of the preforms after injection molding.

The present invention provides for more rapid cooling of the injection molded preforms after they are removed from the injection molding machine. This is provided by a cooling water bath chamber 22 with an open top 24 which is positioned below the movable platen 16. The cooling water bath chamber preferably comprises a cooling water tank 22 having dimensions of approximately 122 cm x 122 cm (4 feet by 4 feet), which depends primarily upon the dimensions of the injection molding equipment, and a depth of approximately 30,5 to 61 cm (1 to 2 feet).

After the formation of the preforms to the point whereat the outer skins thereof are hardened and below the glass transition temperature, the movable platen 16 is displaced on the tie bars 21 away from the stationary piston 12. The neck split ring molds 20 are then linearly displaced away from the movable platen 16 to displace the preforms from the core rods 18, and the neck split ring molds 20 are opened by cams to release the preforms which fall into the cooling water bath chamber 22. The preforms sink into the cooling water bath, and are cooled very rapidly by cooling water contacting all interior and exterior surfaces of the preforms. This overall cooling of the preforms results in very rapid cooling thereof, and contrasts with the prior art approach of only cooling the exterior surface of the preform by contact with a cooling tube in the cooling plate. Moreover, in the present invention, all exterior and interior surfaces of the preforms are in direct and intimate contact with the cooling water, whereas in the prior art, heat from the preform is only removed from the exterior surface, through an intermediate cooling tube, to cooling water circulated through the cooling takeout plate. Accordingly, the reasons for the faster cooling of the present invention are readily apparent.

Moreover, in accordance with another particularly advantageous feature of the present invention, a lubricant additive is preferably added to the cooling water to provide lubricant coatings for the preforms, which adhere to the preforms almost instantaneously as they fall in the cooling water bath, to prevent possible damage to preforms which might contact each other in the cooling water bath. The lubricant additive is added to the water bath at a ratio of 1 part lubricant to approximately 100 to 500 parts water, and preferably comprises oxidized polyethylene emulsion. Oxidized polyethylene is a wax-like lubricant material, and is preferably provided in the cooling water at a low concentration of 00.25% (1:400). One advantage to this approach is that the lubricant additive remains as a coating on the preforms after their removal from the cooling water bath, which aids in preventing damage to the preforms during further handling thereof.

As illustrated by Figure 2, the injection molding machine also includes a horizontal and vertical conveyor system 26 mounted in the cooling water bath chamber to index and convey the preforms horizontally and vertically out of the cooling water bath chamber 22. The conveyor system can include one ridged conveyor belt which extends in an endless loop around conveyor rollers 28. The edges of the belt can be secured by suitable edge restraints such as edge rollers at locations 30 and 32 to ensure that it follows the contour shown in Figure 2.

A heat exchanger cooler 34 and coolant circulating pump 36 are also provided to maintain the cooling water in the bath at a temperature of approximately 4.4°C (40°F), which maximizes cooling of the preforms and also minimizes the formation of vaporization in and around the injection molding machine. The cooling water should be maintained at a low temperature for rapid cooling of the preforms, which also reduces the vapor pressure of the water to prevent an excessive accumulation of water condensation on the tooling of the injection molding machine. Below a water temperature of 4.4°C (40°F), the cooling coils of the heat exchanger would be sufficiently cold to probably result in some freezing of water around the cooling coils, which should be avoided.

The conveyor system 26 conveys the preforms to conventional equipment 38 for additional alignment, sorting and processing. For instance, one typical prior art alignment system 38 has counter rotating bars which support the preforms by their necks, thus aligning all of the preforms. The preforms can then be placed neck down on pins for final draining and drying at 40, which might include drying by circulating air in and around the preforms.

While several embodiments and variations of the present invention for an injection molding arrangement with improved preform cooling are described in detail herein, it should be apparent that the disclosure and teachings of the present invention will suggest many alternative designs to those skilled in the art within the scope of independent claims 1 and 11.

## Claims

1. An injection molding machine for injection molding preforms made of organic polymer material, and for achieving rapid post-mold cooling of the preforms after injection molding thereof, comprising:
a. a stationary platen (12) supporting a plurality of exterior preform mold cavities (14);
b. a movable platen (16) supporting a plurality of interior preform core rods (18) and neck split rings (20), with an interior preform core rod (18) and a neck split ring (20) being associated with and positioned adjacent to each of the plurality of exterior preform mold cavities (14) during molding of the preforms; and
c. a cooling water bath chamber (22) with an open top (24), positioned below the movable platen (16), such that after the formation of a plurality of preforms, wherein the outer skins of the preforms are hardened and below the glass transition temperature of the organic polymer material, the movable platen (16) is displaced away from the stationary platen (12), and the neck split rings (20) displace the preforms from their associated core rods (18), and then the neck split rings (20) are opened to release the preforms into cooling water in the cooling water bath chamber (22), wherein the preforms sink into the cooling water bath maintained at a temperature of at least about 4,4 °C (40 °F) and including a lubricant additive added to the cooling water in the cooling water bath chamber (22) to prevent possible damage to preforms which contact each other in the cooling water bath and are cooled by cooling water contacting all exterior surfaces of the preforms.

2. An injection molding machine as claimed in claim 1, wherein said lubricant additive is present in the water bath at a ratio of 1 part lubricant to approximately 100 to 500 parts water.

3. An injection molding machine as claimed in claim 2, wherein said lubricant additive comprises oxidized polyethylene emulsion.

4. An injection molding machine as claimed in claim 3, wherein the lubricant additive remains as a coating on the preforms after their removal from the cooling water bath which prevents damage to the preforms during further handling thereof.

5. An injection molding machine as claimed in claim 4, further including a horizontal and vertical conveyor system (26) mounted in the cooling water bath chamber (22) to convey and index the preforms as the preforms are conveyed horizontally and vertically out of the cooling water bath chamber (22).

6. An injection molding machine as claimed in claim 5, further including a heat exchanger cooler (34) and circulating system (36) to maintain the cooling water in the bath at a temperature of approximately 4,4 °C (40 °F) which maximizes cooling of the preforms and aslo minimizes the formation of water vapor around the injection molding machine.

7. An injection molding machine as claimed in claim 6, wherein said cooling water bath chamber (22) comprises a cooling water tank having dimensions of approximately 122 cm by 122 cm (4 feet by 4 feet) and a depth of approximately 30,5 cm to 61 cm (1 to 2 feet).

8. An injection molding machine as claimed in claim 1, further including a horizontal and vertical conveyor system (26) mounted in the cooling water bath chamber (22) to convey and index the preforms as the preforms are conveyed horizontally and vertically out of the cooling water bath chamber (22).

9. An injection molding machine as claimed in claim 1, further including a heat exchanger cooler (34) and circulating system (36) to maintain the cooling waer in the bath at a temperature of approxiamately 4,4 °C (40 °F) which maximizes cooling of the preforms and also minimizes the formation of water vapor around the injection molding machine.

10. An injection molding machine as claimed in claim 1, wherein said cooling water bath chamber (22) comprises a cooling water tank having dimensions of approximately 122 cm by 122 cm (4 feet by 4 feet) and depth of approximately 30,5 cm to 61 cm (1 to 2 feet).

11. A method for injection molding preforms made of organic polymer material, and for rapidly cooling the preforms after injection molding thereof, comprising the steps of:
a. supporting a plurality of exterior preform mold cavities (14) on a stationary platen (12);
b. supporting a plurality of interior preform core rods (18) and neck split rings (20) on a movable platen (16), with an interior preform core rod (18) and a neck split ring (20) being associated with and positioned adjacent to each of the plurality of exterior preform mold cavities (14) during molding of the preforms; and
c. after the formation of a plurality of preforms wherein the outer skins of the preforms are hardened and below the glass transition temperature, displacing the movable platen (16) away from the stationary platen (12) displacing the preforms from their associated core rods (18), and then opening the neck split rings (20) to release the preforms into a cooling water bath, wherein the preforms sink into the cooling water bath and maintained at a temperature of at least about 4,4 °C (40 °F) and including a lubricant additive to the cooling water bath to prevent possible damage to preforms which contact each other in the cooling water bath and are cooled by cooling water contacting all exterior surfaces of the preforms.

12. A method as claimed in claim 11, including adding said lubricant additive to the cooling water bath at a ratio of 1 part lubricant to approximately 100 to 500 parts water.

13. A method as claimed in claim 11, including adding a lubricant additive comprising oxidized polyethylene emulsion.

14. A method as claimed in claim 11, wherein the lubricant additive remains as a coating on the preforms after their removal from the cooling water bath which prevents damage to the preforms during further handling thereof.

15. A method as claimed in claim 11, further including conveying and indexing the preforms horizontally and vertically out of the cooling water bath by a horizontal and vertical conveyor system (26) mounted in the cooling water bath.

16. A method as claimed in claim 11, further including displacing each neck split ring (20) relative to each core rod (18) to eject each preform from its associated core rod (18), and then cams on the movable platen (16) open each neck split ring (20) to eject the preforms into the cooling water bath.

17. A method as claimed in claim 11, further including cooling and circulalting the cooling water to maintain the cooling water bath at a temperature of approximately 40 °F, which maximizes cooling of the preforms and also minimizes the formation of water vapor around the injection molding machine.

## Patentansprüche

1. Spritzgießmaschine zum Spritzgießen von Vorformen aus organischem Polymermaterial und zum Erzrielen einer schnellen Nachgußabkühlung der Vorformen, nachdem diese spritzgegossen wurden, aufweisend:
a. eine stationäre Andruckplatte (12), die mehrere äußere Vorform-Spritzgießformen (14) trägt;
b. eine bewegbare Andruckplatte (16), die mehrere innere Vorform-Kernstäbe (18) und Hals-Spaltringe (20) trägt, wobei ein innerer Kernstab (18) und ein Hals-Spaltring (20) jeder der mehreren äußeren Vorform-Gußformen (14) zugeordnet und während des Gießens der Vorformen anliegend angeordnet ist; und
c. ein unterhalb der bewegbaren Andruckplatte (16) angeordnetes Kühlwassergefäß (22) mit einer offenen Oberseite (24), so daß nach Bildung mehrerer Vorformen, wobei die Außenhäute der Vorformen gehärtet und unter die Glasübergangstemperatur des organischen Polymermaterials abgekühlt werden, die bewegbare Andruckplatte (16) Von der stationären Andruckplatte (12) entfernt wird, und die Hals-Spaltringe (20) die Vorformen von deren zugehörigen Kernstäben (18) entfernen, und die Hals-Spaltringe (20) dann geöffnet werden, um die Vorformen in das Kühlwasser im Kühlwassergefäß (22) zu enlassen, wobei die Vorformen in das Kühlwasserbad, das auf einer Temperatur von wenigstens 4,4 °C (40 °F) gehalten wird, und einen dem Kühlwasser in dem Kühlwassergefäß (22) hinzugefügten Schmiermittelzusatz enthält, um eine mögliche Beschädigung einander sich berührender Vorformen in dem Kühlwasserbad zu vermeiden, einsinken und durch das Kühlwasser gekühlt werden, das alle Außenflächen der Vorformen berührt.

2. Spritzgießmaschine gemäß Anspruch 1, wobei der Schmiermittelzusatz in dem Wasserbad mit einem Verhältnis von einem Teil Schmiermittel zu ungefähr 100 bis 500 Teilen Wasser vorhanden ist.

3. Spritzgießmaschine gemäß Anspruch 2, wobei der Schmiermittelzusatz oxidierte Polyethylen-Emulsion enthält.

4. Spritzgießmaschine gemäß Anspruch 3, wobei der Schmiermittelzusatz als Beschichtung auf den Vorformen nach deren Entfernung aus dem Kühlwasserbad verbleibt, was eine Beschädigung der Vorformen bei deren weiterer Verarbeitung verhindert.

5. Spritzgießmaschine gemäß Anspruch 4, ferner aufweisend ein in dem Kühlwassergefäß (22) ausgebildetes horizontales und vertikales Transportsystem (26), um die Vorformen zu transportieren und zu registrieren, wenn die Vorformen horizontal und vertikal aus dem Kühlwassergefäß (22) heraustransportiert werden.

6. Spritzgießmaschine gemäß Anspruch 5, ferner aufweisend eine Wärmeaustausch-Kühleinrichtung (34) und ein Zirkulationssystem (36), um das Kühlwasser in dem Bad auf einer Temperatur von ungefähr 4,4 °C (40 °F) zu halten, was die Abkühlung der Vorformen maximiert und außerdem die Bildung von Wasserdampf um die Spritzgießmaschine minimiert.

7. Spritzgießmaschine gemäß Anspruch 6, wobei das Kühlwassergefäß (22) einen Kühlwassertank der Dimensionen von ungefähr 122 cm mal 122 cm (4 Fuß mal 4 Fuß) und eine Tiefe von ungefähr 30,15 cm bis 61 cm (1 bis 2 Fuß) aufweist.

8. Spritzgießmaschine gemäß Anspruch 1, ferner aufweisend ein in dem Kühlwassergefäß (22) ausgebildetes horizontales und vertikales Transportsystem (26), um die Vorformen zu transportieren und zu registrieren, wenn die Vorformen horizontal und vertikal aus dem Kühlwassergefäß (22) heraustransportiert werden.

9. Spritzgießmaschine gemäß Anspruch 1, ferner aufweisend eine Wämeaustausch-Kühleinrichtung (34) und ein Zirkulationssystem (36), um das Kühlwasser in dem Bad auf einer Temperatur von ungefähr 4,4 °C (40 °F) zu halten, was die Abkühlung der Vorformen maximiert und außerdem die Bildung von Wasserdampf um die Spritzgießmaschine minimiert.

10. Spritzgießmaschine gemäß Anspruch 1, wobei das Kühlwassergefäß (22) einen Kühlwassertank der Dimensionen von ungefähr 122 cm mal 122 cm (4 Fuß mal 4 Fuß) und eine Tiefe von ungefähr 30,15 cm bis 61 cm (1 bis 2 Fuß) aufweist.

11. Verfahren zum Spritzgießen von Vorformen aus organischem Polymermaterial und zur schnellen Abkühlung der Vorformen nach deren Spritzgießen, aufweisend die Schritte:
a. Bereitstellen mehrerer äußerer Vorform-Gießformen (14) auf einer stationären Andruckplatte (12);
b. Bereitstellung innerer Vorform-Kernstäbe (18) und Hals-Spaltringe (20) auf einer bewegbaren Andruckplatte (16), wobei ein innerer Vorform-Kernstab (18) und ein Hals-Spaltring (20) jeder der mehreren äußeren Vorform-Gußformen (14) zugeordnet und während des Gießens der Vorformen anliegend angeordnet ist; und
c. nach Bildung der mehreren Vorformen, wobei die Außerhäute der Vorformen gehärtet und unterhalb die Glasübergangstemperatur gebracht werden, Entfernung der bewegbaren Andruckplatte (16) weg von der stationären Andruckplatte (12), Entfernung der Vorformen von deren zugehörigen Kernstäben (18), und dann Öffnung der Hals-Spaltringe (20), um die Vorformen in das Kühlwasserbad zu entlassen, wobei die Vorformen in das Kühlwasserbad, das auf einer Temperatur von wenigstens 4,4 °C (40 °F) gehalten wird und einen dem Kühlwasserbad zugesetzten Schmiermittelzusatz enthält, um mögliche Beschädigungen der einander im Kühlwasserbad berührenden Vorformen zu vermeiden, einsinken und durch das Kühlwasser abgekühlt werden, das alle Außenflächen der Vorformen berührt.

12. Verfahren gemäß Anspruch 11, aufweisend das Hinzufügen des Schmiermittelzusatzes zu dem Kühlwasserbad in einem Verhältnis von einem Teil Schmiermittel zu ungefähr 100 bis 500 Teilen Wasser.

13. Verfahren gemäß Anspruch 11, aufweisend das Hinzufügen eines Schmiermittelzusatzes aufweisend oxidierte Polyethylen-Emulsion.

14. Verfahren gemäß Anspruch 11, wobei der Schmiermittelzusatz als eine Beschichtung auf den Vorformen nach deren Entfernung aus dem Kühlwasserbad verbleibt, was eine Beschädigung der Vorformen während deren weiterer Verarbeitung verhindert.

15. Verfahren gemäß Anspruch 11, ferner aufweisend den Transport und die Registrierung der Vorformen horizontal und vertikal aus dem Kühlwasser durch ein horizontales und vertikales Transportsystem (26) in dem Kühlwasserbad.

16. Verfahren gemäß Anspruch 11, ferner aufweisend die Entfernung jedes Hals-Spaltringes (20) relativ zu jedem Kernstab (18), um jede Vorform von deren zugehörigem Kernstab (18) zu entfernen, wobei dann Nocken an der bewegbaren Andruckplatte (16) jeden Hals-Spaltring (20) öffnen, um die Vorformen in das Kühlwasserbad zu befördern.

17. Verfahren gemäß Anspruch 11, ferner aufweisend die Abkühlung und die Zirkulation des Kühlwassers, um das Kühlwasserbad auf einer Temperatur von ungefähr 4,4 °C (40 °F) zu halten, was die Abkühlung der Vorformen maximiert und außerdem die Bildung von Wasserdampf um die Spritzgießmaschine minimiert.

## Revendications

1. Machine de moulage par injection pour mouler par injection un matériau polymère organique et pour effectuer un refroidissement après moulage rapide des préformes après leur moulage par injection, comprenant :
a. un plateau fixe (12) supportant une pluralité de cavités de moulage (14) de préformes extérieures ;
b. un plateau mobile (16) supportant une pluralité de broches (18) de préforme intérieures et de bagues de fond fendues (20), une broche (18) de préforme intérieure et une bague de fond fendue (20) étant associées à et placées de manière adjacente à chaque cavité faisant partie de la pluralité de cavités de moulage (14) de préformes extérieures pendant le moulage des préformes ; et
c. une chambre (22) à bain d'eau de refroidissement avec une partie supérieure ouverte (24), placée au-dessous du plateau mobile (16), de telle sorte qu'après la formation d'une pluralité de préformes, dans laquelle les enveloppes extérieures des préformes sont durcies et au-dessous de la température de transition vitreuse du matériau polymère organique, le plateau mobile (16) est éloigné du plateau fixe (12), et les bagues de fond fendues (20) déplacent les préformes de leurs broches (18) associées, et ensuite les bagues de fond fendues (20) sont ouvertes pour libérer les préformes dans l'eau de refroidissement contenue dans la chambre (22) à bain d'eau de refroidissement, dans laquelle les préformes plongent dans le bain d'eau de refroidissement maintenu à une température d'au moins 4,4°C (40°F) environ et comprenant un additif lubrifiant ajouté à l'eau de refroidissement dans la chambre (22) à bain d'eau de refroidissement afin d'empêcher tout dommage possible sur les préformes qui sont en contact les unes avec les autres dans le bain d'eau de refroidissement et qui sont refroidies par l'eau de refroidissement qui vient en contact avec toutes les surfaces extérieures des préformes.

2. Machine de moulage par injection selon la revendication 1, dans laquelle ledit additif lubrifiant est présent dans le bain d'eau dans un rapport d'une partie de lubrifiant pour environ 100 à 500 parties en eau.

3. Machine de moulage par injection selon la revendication 2, dans laquelle ledit additif lubrifiant comprend une émulsion de polyéthylène oxydé.

4. Machine de moulage par injection selon la revendication 3, dans laquelle l'additif lubrifiant reste en tant que revêtement sur les préformes après leur retrait du bain d'eau de refroidissement qui empêche tout dommage sur les préformes pendant leur manipulation ultérieure.

5. Machine de moulage par injection selon la revendication 4, comprenant en outre un système (26) de transport horizontal et vertical monté dans la chambre (22) à bain d'eau de refroidissement pour transporter et indexer les préformes lorsque les préformes sont transportées horizontalement et verticalement hors de la chambre (22) à bain d'eau de refroidissement.

6. Machine de moulage par injection selon la revendication 5, comprenant en outre un refroidisseur (34) d'échange de chaleur et un système de circulation (36) pour maintenir l'eau de refroidissement du bain à une température de 4,4°C (40°F) environ qui maximise le refroidissement des préformes et qui minimise également la formation de vapeur d'eau autour de la machine de moulage par injection.

7. Machine de moulage par injection selon la revendication 6, dans laquelle ladite chambre (22) à bain de refroidissement comprend un réservoir d'eau de refroidissement ayant des dimensions d'environ 122 cm par 122 cm (4 pieds par 4 pieds) et une profondeur de 30,5 cm à 61 cm (1 à 2 pieds) environ.

8. Machine de moulage par injection selon la revendication 1, comprenant en outre un système de transport (26) horizontal et vertical monté dans la chambre (22) à bain d'eau de refroidissement pour transporter et indexer les préformes lorsque les préformes sont transportées horizontalement et verticalement hors de la chambre (22) à bain d'eau de refroidissement.

9. Machine de moulage par injection selon la revendication 1, comprenant en outre un refroidisseur (34) d'échangeur de chaleur et des moyens de circulation (36) pour maintenir l'eau de refroidissement du bain à une température de 4,4°C (40°F) environ qui maximise le refroidissement des préformes et qui minimise également la formation de vapeur d'eau autour de la machine de moulage par injection.

10. Machine de moulage par injection selon la revendication 1, dans laquelle ladite chambre (22) à bain d'eau de refroidissement comprend un réservoir d'eau de refroidissement ayant des dimensions d'environ 122 cm par 122 cm (4 pieds par 4 pieds) et une profondeur de 30,5 cm à 61 cm (1 à 2 pieds) environ.

11. Procédé pour mouler par injection des préformes fabriquées en matériau polymère organique, et pour refroidir rapidement les préformes après leur moulage par injection, comprenant les étapes consistant à :
a. supporter une pluralité de cavités de moulage (14) de préformes extérieures sur un plateau fixe (12);
b. supporter une pluralité de broches (18) de préformes intérieures et de bagues de fond fendues (20) sur un plateau mobile (16), une broche (18) de préforme intérieure et une bague de fond fendue (20) étant associées à et placées de manière adjacentes à chaque cavité faisant partie de la pluralité de cavités de moulage (14) extérieures pendant le moulage des préformes ; et
c. après la formation d'une pluralité de préformes dans lesquelles les enveloppes extérieures des préformes sont durcies et au-dessous de la température de transition vitreuse, éloigner le plateau mobile (16) du plateau fixe (12) déplaçant les préformes de leurs broches (18) associées, et ouvrir ensuite les bagues de fond fendues (20) pour libérer les préformes dans un bain d'eau de refroidissement, dans lequel les préformes plongent dans le bain d'eau de refroidissement qui est maintenu à une température de 4,4°C (40°F) environ et comprenant un additif lubrifiant au bain d'eau de refroidissement pour empêcher tout dommage possible sur les préformes qui sont en contact les unes avec les autres dans le bain d'eau de refroidissement et qui sont refroidies par l'eau de refroidissement venant en contact avec toutes les surfaces extérieures des préformes.

12. Procédé selon la revendication 11, comprenant l'ajout dudit additif lubrifiant au bain d'eau de refroidissement dans un rapport d'une partie de lubrifiant pour 100 à 500 parties d'eau.

13. Procédé selon la revendication 11, comprenant l'ajout d'un additif lubrifiant comportant une émulsion de polyéthylène oxydé.

14. Procédé selon la revendication 11, dans lequel l'additif lubrifiant reste en tant que revêtement sur les préformes après leur retrait du bain d'eau de refroidissement qui empêche tout dommage sur les préformes pendant leur manipulation ultérieure.

15. Procédé selon la revendication 11, comprenant en outre le transport et l'indexage des préformes horizontalement et verticalement hors du bain d'eau de refroidissement au moyen d'un système de transport (26) horizontal et vertical monté dans le bain d'eau de refroidissement.

16. Procédé selon la revendication 11, comprenant en outre le déplacement de chaque bague de fond fendue (20) par rapport à chaque broche (18) afin d'éjecter chaque préforme de sa broche (18) associée, et ensuite les cames sur le plateau mobile (16) ouvrent chaque bague de fond fendue (20) pour éjecter les préformes dans le bain d'eau de refroidissement.

17. Procédé selon la revendication 11, comprenant en outre le refroidissement et la circulation de l'eau de refroidissement pour maintenir le bain d'eau de refroidissement à une température de 4,4°C (40°F) qui maximise le refroidissement des préformes et qui minimise la formation de vapeur d'eau autour de la machine de moulage par injection.
